# FASCICULE DE BREVET EUROPEEN

(11) **EP 0 628 225 B1**
(45) Date de publication et mention de la délivrance du brevet: **22.05.1996**
(21) Numéro de dépôt: 93905422.7
(22) Date de dépôt: 24.02.1993
(51) Int. Cl.: H02K 41/025, H02K 15/02

(54) **MODULE INDUCTEUR POUR UN MOTEUR ELECTRIQUE LINEAIRE ASYNCHRONE**
INDUKTOREINHEIT FUER EINEN ELEKTRISCHEN LINEAREN ASYNCHRONMOTOR
INDUCTION MODULE FOR AN ASYNCHRONOUS LINEAR ELECTRIC MOTOR

(30) Priorité: 24.02.1992 FR 9202324
(43) Date de publication de la demande: 14.12.1994
(73) Titulaire: DEFONTAINE, Jean-Claude, F-69400 Villefranche-sur-Saône (FR); DEFONTAINE, Bernard, F-01700 Beynost (FR)
(72) Inventeur: DEFONTAINE, Jean-Claude, F-69400 Villefranche-sur-Saône (FR); DEFONTAINE, Bernard, F-01700 Beynost (FR)
(74) Mandataire: Bruder, Michel
(86) Numéro de dépôt international: FR9300183
(87) Numéro de publication internationale: WO9317487

(56) Documents cités:
- EP-A- 0 166 350
- CH-A- 474 893
- DD-A- 95 621
- DE-A- 2 824 951
- GB-A- 1 466 426
- US-A- 1 929 990
- US-A- 4 171 493
- US-A- 4 620 301
- US-A- 4 704 568
- PATENT ABSTRACTS OF JAPAN vol. 04, no. 141 (E-28)(623) 4 October 1980 & JP-A-55 094 951

## Description

La présente invention concerne un module inducteur pour un moteur électrique linéaire asynchrone et son procédé de fabrication.

Un moteur électrique linéaire comporte un inducteur fixe ou mobile comprenant un circuit magnétique rectiligne allongé, de forme générale sensiblement parallélépipédique, dans lequel sont découpées une succession longitudinale d'encoches séparées entre elles par des dents ou pièces polaires. Dans les encoches sont logés des enroulements conducteurs alimentés par des courants polyphasés sinusoïdaux produisant un champ magnétique glissant. Le moteur linéaire comporte également un induit destiné à assurer le retour du flux magnétique produit, cet induit, mobile ou fixe, délimitant un entrefer étroit avec l'inducteur, par l'intermédiaire de moyens de support et de guidage interposés entre les deux éléments. Sous l'effet de la force de Laplace, il se produit un mouvement rectiligne de l'induit si l'inducteur est maintenu fixe ou bien, inversement, de l'inducteur si l'induit est monté de manière fixe.

On connaît déjà, ainsi qu'il est décrit dans le brevet CH-A-474 893, un moteur linéaire à induction comportant un boîtier allongé, à section transversale en forme de U, entourant le circuit magnétique de l'inducteur et ses enroulements. L'espace compris entre le boîtier, le circuit magnétique et les enroulements est rempli d'un mélange isolant. On connaît également, ainsi qu'il est décrit dans le brevet DD-A-95 621, un fourreau de protection pour un moteur linéaire, ce fourreau pouvant également constituer un moule de coulée et un élément raidisseur pour une enveloppe en résine synthétique isolante coulée autour du circuit magnétique et de ses enroulements.

Du document US-A-1 929 990 est connu un module inducteur dont les faces polaires planes des dents dépassent du bord de l'enveloppe entourant le module inducteur; le module n'est pas moulé dans de la matière isolante.

La présente invention concerne des perfectionnements apportés aux inducteurs des moteurs linéaires connus dans le but de faciliter leur fabrication et d'abaisser leur prix de revient.

A cet effet ce module inducteur pour un moteur éléctrique linéaire asynchrone comprenant une coque de protection externe de forme parallélépipédique, constituée par un fond horizontal rectangulaire, deux parois verticales et longitudinales opposées et deux parois verticales et transversales opposées, un circuit magnétique feuilleté constitué par un barreau, de forme générale parallélépipédique, de plus petite longueur et de plus petite largeur que les longueur et largeur internes de la coque de protection, s'étendant suivant l'axe longitudinal de la coque de protection externe, ce barreau présentant, à sa partie supérieure, une succession d'encoches transversales régulièrement espacées les unes des autres dans le sens longitudinal, débouchant dans la face supérieure et dans les deux faces verticales et longitudinales du barreau, en délimitant entre elles des dents constituant des pièces polaires, des enroulements inducteurs logés dans les encoches du barreau magnétique, et une matière isolante remplissant l'espace laissé libre à l'intérieur de la coque de protection, entre celle-ci et le barreau magnétique et les enroulements qu'il porte, est caractérisé en ce que la hauteur du barreau magnétique est supérieure à la hauteur des parois longitudinales et transversales de la coque de protection, si bien qu'après coulée de la matière isolante les faces polaires planes des dents du barreau magnétique émergent d'elles-mêmes du bloc de matière isolante solidifiée.

On décrira ci-après, à titre d'exemples non limitatifs, diverses formes d'exécution de la présente invention, en référence aux dessins annexés sur lesquels:

La figure 1 est une vue en coupe verticale et longitudinale d'un moteur électrique linéaire monophasé comportant un module inducteur suivant l'invention.

La figure 2 est une vue en plan du module inducteur représenté sur la figure 1.

La figure 3 est un schéma illustrant la disposition des enroulements dans le circuit magnétique du module inducteur des figures 1 et 2.

La figure 4 est une vue en coupe verticale et transversale faite suivant la ligne IV-IV de la figure 2.

La figure 5 est une vue en coupe verticale et longitudinale d'un module inducteur pour un moteur linéaire triphasé.

La figure 6 est un schéma illustrant la disposition des enroulements dans le circuit magnétique du module inducteur représenté sur la figure 5.

La figure 7 est une vue en plan schématique illustrant le procédé de fabrication des tôles élémentaires, destiné à constituer le circuit magnétique du module inducteur.

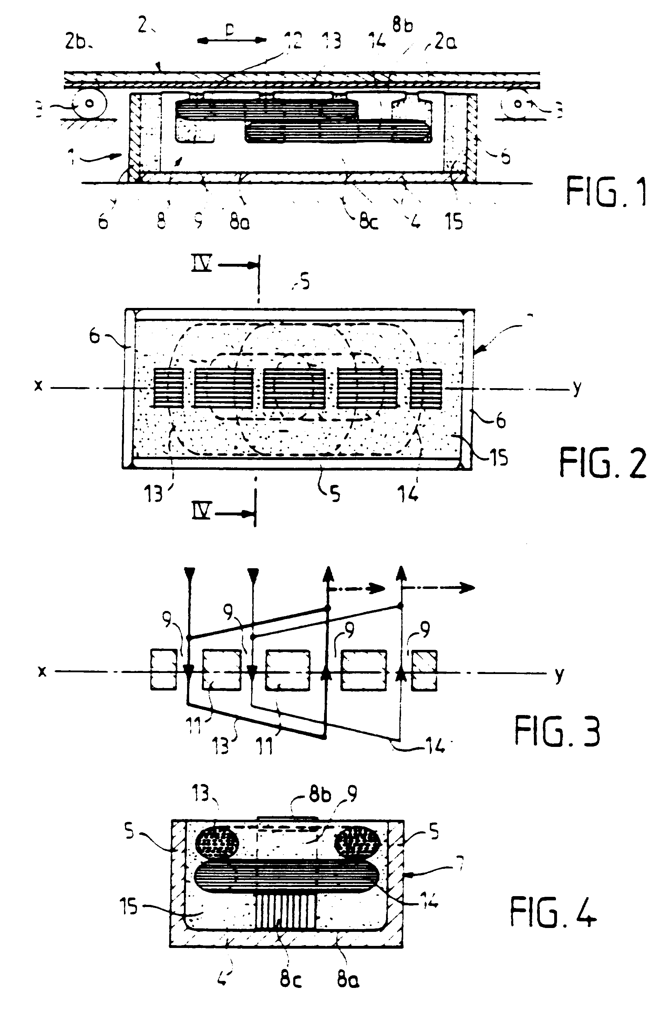

Le moteur électrique linéaire qui est représenté schématiquement sur la figure 1, comprend un module inducteur 1 qui est fixe et avec lequel coopère un élément d'induit mobile 2. Une telle disposition n'est toutefois pas limitative, l'inducteur 1 pouvant être mobile alors que l'induit 2 est fixe. Le module inducteur 1 a la forme générale d'un parallélépipède rectangle, s'étendant horizontalement. L'élément d'induit 2 s'étend dans un plan horizontal, au-dessus du module inducteur 1, de manière à définir avec le circuit magnétique de celui-ci, qui sera décrit plus loin, un très faible entrefer de l'ordre de quelques millimètres. L'élément d'induit 2 qui est solidaire de la pièce devant être entraînée, comprend, par exemple, une culasse supérieure 2a en fer, et une règle inférieure en cuivre 2b. Le faible entrefer est maintenu entre le module inducteur 1 et l'élément d'induit 2, au moyen de roues ou galets 3, ou de tout autre moyen de support et de guidage.

Le module inducteur 1 suivant l'invention de forme générale parallélépipédique, comporte un fond honzontal rectangulaire 4, deux parois verticales et longitudinales opposées 5 et deux parois verticales et transversales opposées 6. L'ensemble des parois 4,5,6 constitue une coque de protection externe 7 ouverte à sa partie supérieure. Cette coque est réalisée en n'importe quel matériau approprié, à bonne conductibilité thermique, par exemple en aluminium.

A l'intérieur de la coque de protection 7 est logé un circuit magnétique feuilleté constitué par un barreau 8, de forme générale parallélépipédique, de plus petite longueur et de plus petite largeur que les longueur et largeur internes de la coque de protection 7. Ce barreau magnétique 8 est constitué par une série de tôles métalliques rectangulaires, s'étendant verticalement et longitudinalement et qui sont accolées les unes aux autres. Le barreau magnétique 8 s'étend suivant l'axe longitudinal xy de la coque de protection 7. Sa face inférieure horizontale 8a est en appui contre le fond 4 de la coque de protection 7, tandis que sa face supérieure 8b se trouve dans un plan horizontal qui est situé au-dessus du plan horizontal contenant les bords supérieurs des parois longitudinales 5 et transversales 6 de la coque de protection 7. A sa partie supérieure le barreau 8 présente une succession d'encoches transversales 9 qui débouchent dans la face supérieure 8b du barreau 8, qui sont régulièrement espacées les unes des autres, dans le sens longitudinal, et qui sont découpées à un pas constant dans les tôles individuelles constituant le barreau magnétique 8, comme on le verra plus loin. Les encoches 9 délimitent entre elles des dents 11 constituant des pièces polaires. L'intervalle séparant deux encoches successives 9 ou deux dents successives 11 correspond à un pas prédéterminé p. Les encoches 9 sont découpées de part en part à travers le barreau magnétique 8, dans le sens transversal, et elles débouchent dans les deux faces verticales et longitudinales de ce barreau. En dessous des encoches 9 et des dents 11 subsiste une partie inférieure continue ou semelle 8c du barreau magnétique 8 qui est en appui sur le fond 4 de la coque 7.

De préférence chaque dent 11 du barreau magnétique 8 est prolongée, à son extrémité supérieure, par un épanouissement polaire 12 s'étendant de part et d'autre de la dent 11, dans le sens longitudinal, en direction d'épanouissements polaires similaires prévus sur les deux dents 11 voisines. De ce fait l'entrée de chaque encoche 8, dans le plan de la face supérieure 8b du barreau magnétique 8, a une largeur plus faible que la largeur de l'encoche 8 en dessous de son entrée.

Le module inducteur 1 comporte également des enroulements inducteurs dont le type et la disposition dans les encoches 9 dépendent du type d'alimentation du moteur. Dans la forme d'exécution représentée sur les figures 1 à 4, le bobinage du moteur est alimenté par un réseau monophasé et le bobinage du moteur comporte deux enroulements inducteurs 13 et 14 qui sont respectivement alimentés en courants déphasés au moyen d'un condensateur, de la manière habituelle. Suivant la puissance désirée pour le moteur, chacun des enroulements inducteurs 13,14 comprend une ou plusieurs bobines connectées en série et le barreau magnétique 8 comporte un nombre d'encoches égal à 4n, n étant un nombre entier égal ou supérieur à 1. Le module inducteur correspondant au moteur élémentaire, de plus faible puissance qui est représenté sur les figures 1 à 4, comprend un barreau magnétique 8 ayant le nombre minimal d'encoches, c'est-à-dire quatre encoches, et les deux enroulements inducteurs 13 et 14 comprennent chacun une seule bobine. La bobine au premier enroulement inducteur 13 passe à travers les première et troisième encoches tandis que la bobine du second enroulement inducteur 14 passe à travers les deuxième et quatrième encoches, ainsi qu'il est représenté. La figure 3 représente schématiquement la disposition des enroulements 13 et 14, alimentés en courants déphasés, l'enroulement 13 étant indiqué en trait fort tandis que l'enroulement 14 est indiqué en trait fin. Naturellement dans le cas de moteurs de plus forte puissance, le barreau magnétique 8 comporte 8,12,16... encoches et les enroulements inducteurs 13 et 14 comportent des bobines additionnelles raccordées en série, ainsi qu'il est indiqué par les flèches en trait mixte sur la figure 3, ces bobines additionnelles étant logées dans les encoches respectives suivantes de la même façon que celles représentées sur la figure 3.

Pour assurer la protection du barreau magnétique 8 et des enroulements 13,14 qu'il porte, une matière isolante 15, telle qu'une résine, remplit l'espace laissé libre à l'intérieur de la coque de protection 7, entre celle-ci et le barreau magnétique 8 et les enroulements 13,14.

Suivant l'invention, comme il a été indiqué précédemment, la hauteur du barreau magnétique 8 est choisie un peu supérieure à la hauteur des parois longitudinales 5 et transversales 6 de la coque de protection 7. Par conséquent, il en résulte un avantage notable lors de la phase finale de la fabrication du module inducteur 1. Lors de cette phase finale on place le barreau magnétique 8, pourvu des enroulements 13,14, à l'intérieur de la coque de protection 7, en laissant un certain espace libre tout autour de lui. Dans cet espace on coule ensuite un isolant durcissable, tel qu'une résine, de manière à remplir par gravité l'intérieur de la coque de protection 7 jouant alors le rôle de moule. On arrête le remplissage de ce moule lorsque le niveau de la résine liquide à l'interieur affleure les bores supérieurs des parois 5 et 6. La résine remplit alors outre l'espace situé à l'extérieur du barreau magnétique 8, les parties vides des encoches 9 et également les entrées de celles-ci, situées juste au-dessus des enroulements 13,14. Toutefois les faces polaires planes 8b des dents 11, qui se trouvent dans le plan de la face supérieure 8b du barreau 8, ne sont pas atteintes par la résine et elles restent ainsi totalement dégagées. Par conséquent, après durcissement de la résine 15, le module inducteur 1 présente des faces polaires 8b émergeant du bloc de résine solidifiée, parfaitement nettes, situées dans un même plan horizontal, et il n'est donc pas nécessaire de procéder à une opération additionnelle de rectification de ces faces, d'où une économie notable sur le prix de revient du module inducteur 1.

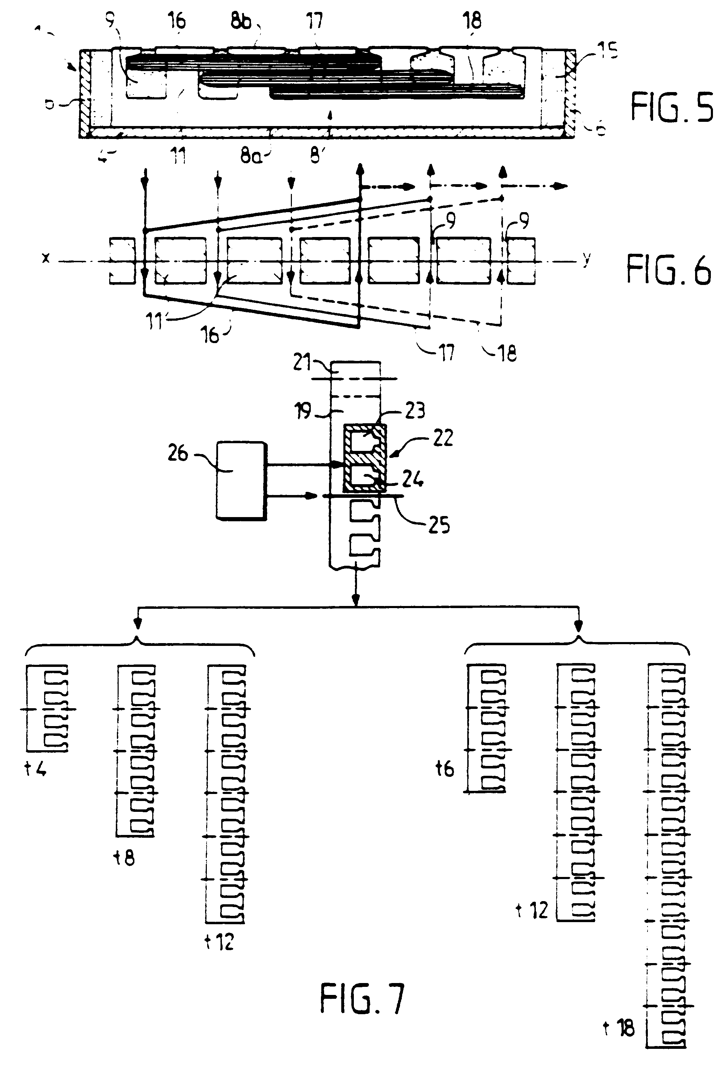

Les figures 5 et 6 représentent un module inducteur 1 conçu pour un moteur linéaire triphasé. Le barreau magnétique 8 comprend alors un nombre d'encoches 9 égal à six ou à un multiple de six Le module inducteur 1 comprend dans ce cas trois enroulements inducteurs correspondant aux trois phases du courant d'alimentation, à savoir un premier enroulement supérieur 16 alimenté par la première phase, situé dans un plan horizontal de dessus, passant dans les première et quatrième encoches 9, un deuxième enroulement 17, alimenté par la deuxième phase, s'étendant, en dessous du précédent, dans un plan horizontal intermédiaire et passant dans les deuxième et cinquième encoches, et enfin un troisième enroulement inférieur 18, alimenté par la troisième phase, situé dans un plan de dessous et passant dans les quatrième et sixième encoches. Ces enroulements 16,17 et 18 sont représentés, sur la figure 6, respectivement en trait fort, en trait fin et en trait interrompu. Naturellement, dans le cas de moteurs de plus forte puissance, le barreau magnétique comporte un plus grand nombre d'encoches et de bobines, comme dans le cas du moteur monophasé.

Du fait de la disposition superposée des enroulements 13,14 et 16,17, 18 portés par le barreau magnétique 8 il est apparu que, par suite de variation de reductance résultant des dispositions différentes des enroulements par rapport au circuit magnétique, les courants consommés par les différents enroulements sont différents. Pour compenser cette différence on réalise le ou les enroulements du ou des plans inférieurs, c'est-à-dire l'enroulement 14 du plan de dessous dans la version monophasée et les enroulements 17 du plan intermédiaire et 18 du plan de dessous dans la version triphasée, avec un nombre de spires inférieur à celui de l'enroulement 13 ou 16 du plan de dessus. Par exemple si l'enroulement 13 du plan de dessus, dans la version monophasée, comporte 600 spires d'un fil de cuivre ayant un diamètre de 0,425 mm, l'enroulement 14 du plan de dessous n'en comporte que 575. De cette façon on obtient des consommations de courant égales dans les différents enroulements et par conséquent des vitesses de déplacement de l'induit 2 qui sont égales dans les deux sens.

La figure 7 illustre, à titre indicatif, schématiquement un procédé particulièrement économique et souple pour la fabrication, à la demande, des tôles individuelles constituant les barreaux magnétiques 8. Les sections de tôle qui sont utilisées, en fonction de la puissance désirée pour le moteur, sont toutes découpées à partir d'une même bande de tôle magnétique 19 qui est dévidée en continu à partir d'une bobine 21. Cette bande de tôle 19 est avancée d'un mouvement intermittent, par des moyens connus non représentés, et elle passe à travers un poste de poinçonnage 22 qui est équipé de deux poinçons identiques 23 et 24, lesquels sont disposés de manière à pouvoir découper simultanément une paire d'encoches 9 dans un même bord longitudinal de la tôle 19. Après le poste de poinçonnage 22, la tôle est coupée à la longueur voulue au moyen d'une cisaille transversale 25 dont le mouvement vertical est commandé, de même que celui des poinçons 23,24, par une unité de commande automatisée 26. L'appareil automatisé de découpage de la tôle 19 permet ainsi d'obtenir à volonté, en fonction du programme de fabrication, des sections de tôle comportant un nombre d'encoches égal à quatre ou à un multiple de quatre, telles que les sections de tôle t₄, t₈,t₁₂ respectivement à quatre huit et douze encocnes, pour la réalisation d'un barreau magnétique 8 pour un moteur monophnasé, ou encore des sections de tôle comportant un nombre d'encoches égal à six ou à un multiple de six, telles que les sections de tôle t₆,t₁₂,t₁₈ à six, douze et dix-huit encoches, dans le cas d'un barreau magnétique 8 prévu pour un moteur triphasé.

## Revendications

1. Module inducteur pour un moteur électrique linéaire asynchrone comprenant une coque de protection externe (7) de forme parallélépipédique, constituée par un fond horizontal rectangulaire (4), deux parois verticales et longitudinales opposées (5) et deux parois verticales et transversales opposées (6), un circuit magnétique feuilleté constitué par un barreau (8), de forme générale parallélépipédique, de plus petite longueur et de plus petite largeur que les longueur et largeur internes de la coque de protection (7), s'étendant suivant l'axe longitudinal (xy) de la coque de protection externe (7), ce barreau (8) présentant, à sa partie supérieure, une succession d'encoches transversales (9) régulièrement espacées les unes des autres dans le sens longitudinal, débouchant dans la face supérieure (8b) et dans les deux faces verticales et longitudinales du barreau (8), en délimitant entre elles des dents (11) constituant des pièces polaires, des enroulements inducteurs (13,14;16,17,18) logés dans les encoches (9) du barreau magnétique (8), et une matière isolante (15) remplissant l'espace laissé libre à l'intérieur de la coque de protection (7), entre celle-ci et le barreau magnétique (8) et les enroulements qu'il porte, caractérisé en ce que la hauteur du barreau magnétique (8) est supérieure à la hauteur des parois longitudinales (5) et transversales (6) de la coque de protection (7), si bien qu'après coulée de la matière isolante (15) les faces polaires planes (8b) des dents (11) du barreau magnétique émergent d'elles-mêmes du bloc de matière isolante (15) solidifiée.

2. Module inducteur suivant la revendication 1 dans lequel les enroulements inducteurs (13,14;16,17,18) sont disposés respectivement dans des plans horizontaux différents, caractérisé en ce que l'enroulement inducteur (13) situé dans un plan de dessus comporte un nombre de spires supérieur à celui de l'enroulement (14) situé dans le plan de dessous.

## Patentansprüche

1. Induktoreinheit für einen elektrischen linearen Asynchronmotor, mit: einer quaderförmigen externen Schutzhülse (7), die aus einem rechteckigen horizontalen Boden (4), zwei vertikalen, einander gegenüberliegenden Längswänden (5) und zwei vertikalen, einander gegenüberliegenden Querwänden (6) besteht, einem Magnetkreis mit Schichtaufbau, der aus einem allgemein quaderförmigen Stab (8) besteht, dessen Länge und Größe kleiner als die Länge und Größe der Schutzhülse (7) sind und der sich entlang der Längsachse (xy) der externen Schutzhülse (7) erstreckt, wobei dieser Stab (8) an seinem oberen Teil eine Reihe von in Querrichtung verlaufenden Aussparungen (9) aufweist, welche in Längsrichtung gleichmäßig voneinander beabstandet sind und in die obere Oberfläche (8b) und in die zwei vertikalen und in Längsrichtung verlaufenden Oberflächen des Stabes (8) münden, wobei sie zwischen sich Zähne (11) abgrenzen, die Polstücke bilden, Erregerwicklungen (13, 14; 16, 17, 18), die in den Aussparungen (9) des Magnetstabs (8) angeordnet sind, sowie einem Isoliermaterial (15), welches den freibleibenden Raum im Inneren der Schutzhülse (7) zwischen der Schutzhülse und dem Magnetstab (8) sowie den von ihm getragenen Wicklungen ausfüllt, dadurch gekennzeichnet, daß die Höhe des Magnetstabes (8) die Höhe der Längs- (5) und Querwände (6) der Schutzhülse (7) übersteigt, so daß nach Abkühlen des Isoliermaterials (15) die ebenen Polflächen (8b) der Zähne (11) des Magnetstabes von selbst aus dem ausgehärteten Block des Isoliermaterials (15) hervortreten.

2. Induktoreinheit gemäß Anspruch 1, wobei die Erregerwicklungen (13, 14; 16, 17, 18) jeweils in unterschiedlichen horizontalen Ebenen angeordnet sind, dadurch gekennzeichnet, daß die Erregerwicklung (13), die in einer oberen Ebene verläuft, eine größere Anzahl von Windungen umfaßt als die Wicklung (14), die sich in einer unteren Ebene befindet.

## Claims

1. Induction module for an asynchronous linear electric motor comprising an outer protective shell (7) of parallelepipedic shape constituted by a rectangular horizontal bottom (4), two opposite vertical and longitudinal walls (5) and two opposite vertical and transverse walls (6), a laminated magnetic circuit constituted by a bar (8), generally of parallelepipedic shape, of shorter length and of smaller width than the inner length and width of the protective shell (7), extending along the longitudinal axis (xy) of the outer protective shell (7), this bar (8) presenting in its upper part a succession of transverse recesses (9) regularly spaced apart from one another in the longitudinal direction, opening in the upper face (8b) and in the two vertical and longitudinal faces of the bar (8), defining therebetween projections (11) constituting polar pieces, field coils (13, 14, 16, 17, 18) housed in the recesses (9) of the magnetic bar (8), and an insulating material (15) filling the space left free inside the protective shell (7) between the latter and the magnetic bar (8) and the coils that it bears, characterized in that the height of the magnetic bar (8) is greater than the height of the longitudinal (5) and transverse (6) walls of the protective shell (7), so that, after the insulating material (15) has been cast, the planar polar faces (8b) of the projections (11) of the magnetic bar emerge from the block of solidified insulating material (15).

2. Induction module according to Claim 1, in which the field coils (13, 14, 16, 17, 18) are respectively disposed in different horizontal planes, characterized in that the field coil (13) located in an upper plane comprises a number of turns greater than that of the coil (14) located in the lower plane.
